# EUROPEAN PATENT APPLICATION

(11) **EP 4 772 599 A1**
(43) Date of publication of application: **08.07.2026**
(21) Application number: 24859920.1
(22) Date of filing: 29.08.2024
(51) Int. Cl.: C10M 141/10, F16C 19/06, F16C 33/66, H02K 5/173, C10M 135/18, C10M 137/14, C10N 30/00, C10N 30/06, C10N 40/02, C10N 50/10

(54) **ROLLING BEARING**

(30) Priority: 30.08.2023 JP 2023140484
(71) Applicant: Minebea Mitsumi Inc., Kitasaku-gun, Nagano 3890293 (JP)
(72) Inventor: ITO, Masaki, Kitasaku-gun, Nagano 389-0293 (JP); ASAI, Yusuke, Kitasaku-gun, Nagano 389-0293 (JP)
(74) Representative: Winter, Brandl - Partnerschaft mbB
(86) International application number: PCT/JP2024/031019
(87) International publication number: WO 2025/047893

(57) **Abstract**

[Object] To provide a rolling bearing capable of improving friction characteristics and preventing or reducing deterioration of acoustic characteristics in a rolling bearing filled with a grease composition containing molybdenum dithiocarbamate and triphenyl phosphorothioate; and to provide a motor incorporating the bearing. [Solution] A rolling bearing with an outer diameter of 22 mm or less, the rolling bearing including: an inner ring; an outer ring disposed coaxially with the inner ring at an outer peripheral side of the inner ring; a plurality of rolling elements disposed between the inner ring and the outer ring; a retainer to hold the rolling elements; and a grease composition held between the inner ring and the outer ring, wherein the grease composition contains a base oil, a thickener, molybdenum dithiocarbamate containing an alkyl group with 8 or more carbon atoms, and triphenyl phosphorothioate, and the rolling bearing has an Anderon value of an M band of 1.2 or less after the inner ring is rotated at a rotation speed of 1800 rpm for 30 seconds at room temperature in an air atmosphere in a state of applying a preload to the outer ring in an axial direction so that an average surface pressure of the inner ring is 800 MPa; and a motor including the rolling bearing.

## Description

### Technical Field

The present invention relates to a rolling bearing filled with a grease composition containing molybdenum dithiocarbamate and triphenyl phosphorothioate and to a motor including the rolling bearing.

### Background Art

In the technical field of greases and lubricating oils, a thiophosphate ester, such as triphenyl phosphorothioate (TPPT (CAS RN 597-82-0: also referred to as triphenyl phosphorothionate or triphenoxyphosphine sulfide)) has been used as a friction modifier (anti-wear agent) and an organic molybdenum compound as an extreme pressure agent in the art; in an attempt to improve friction reduction effect in sliding members, a grease composition using a combination of these agents has been proposed (Patent Literature 1).

### Citation List

### Patent Literature

Patent Literature 1: JP H06-330072 A

### Summary of Invention

### Technical Problem

Motors used in automobiles, household electrical appliances, and the like, such as fan motors and cleaner motors, and bearings used in such motors are required to have not only durability but also lower noise profile in recent years. A grease composition applied to a bearing used in such a motor is also desired to have a performance capable of improving friction characteristics, a contributor to improving durability, without deteriorating acoustic characteristics.

Although the grease composition disclosed in Patent Literature 1 has been studied in terms of the friction coefficient, wear resistance, temperature suppression, compatibility with sealing materials, and heat resistance, the literature does not focus on the acoustic characteristics of a bearing obtained by applying the grease composition.

An object of the present invention is to provide a rolling bearing capable of improving friction characteristics and preventing or reducing deterioration of acoustic characteristics in a rolling bearing filled with a grease composition containing molybdenum dithiocarbamate and triphenyl phosphorothioate; and to provide a motor incorporating the bearing.

### Solution to Problem

One aspect of the present invention relates to a rolling bearing having an outer diameter of 22 mm or less, the rolling bearing including:
an inner ring;
an outer ring disposed coaxially with the inner ring at an outer peripheral side of the inner ring;
a plurality of rolling elements disposed between the inner ring and the outer ring;
a retainer to hold the rolling elements; and
a grease composition held between the inner ring and the outer ring, wherein
the grease composition contains a base oil, a thickener, molybdenum dithiocarbamate containing an alkyl group having 8 or more carbon atoms, and triphenyl phosphorothioate, and
the rolling bearing has an Anderon value of an M band of 1.2 or less after the inner ring is rotated at a rotation speed of 1800 rpm for 30 seconds at room temperature in an air atmosphere in a state of applying a preload to the outer ring in an axial direction so that an average surface pressure of the inner ring is 800 MPa.

The present invention also relates to a motor including the rolling bearing.

### Brief Description of Drawings

FIG. 1 is a schematic view illustrating an example of a structure of a rolling bearing according to the present invention.
FIG. 2 is a schematic view illustrating an example of a structure of a motor according to the present invention.
FIG. 3 is a graph showing measurement results of friction coefficients of Examples 1 and 2 and Comparative Examples 1 and 2 in friction characteristics evaluation (metal-metal).
FIG. 4 is a graph showing measurement results of Anderon values (M band) of Examples 1 and 2 and Comparative Examples 1 and 2 in acoustic evaluation.
FIG. 5 is a graph showing measurement results of Anderon values (M band) of Examples 3 and 4, Comparative Example 3, Examples 5 and 6, and Comparative Example 4 in acoustic evaluation.

### Description of Embodiments

The present inventors have focused on the acoustic characteristics of rolling bearings and conducted studies on a grease to be applied to the bearings. On the course of the studies, the present inventors have confirmed that the grease composition used in the examples of Patent Literature 1 described above, i.e., a urea grease composition using a combination of a sulfurized dialkyldithiocarbamic acid with 4 carbon atoms, molybdenum, and triphenyl phosphorothioate, resulted in excellent friction characteristics compared with a urea grease composition blended with triphenyl phosphorothioate alone, but on the other hand, the acoustic characteristics rather deteriorated compared with the composition with triphenyl phosphorothioate used alone.

To address this problem of the deterioration of the acoustic characteristics, the present inventors have focused on the length of the alkyl chain contained in the molybdenum compound and have found for the first time that the acoustic characteristics are changed by the length of the alkyl chain without affecting the friction characteristics.

That is, the present inventors have found that the friction characteristics can be improved without deteriorating the acoustic characteristics by using a combination of molybdenum dithiocarbamate having an alkyl group with 8 or more carbon atoms and triphenyl phosphorothioate, and have completed the present invention.

As shown in the results of Examples described later, the present inventors have confirmed that the combination of the molybdenum dithiocarbamate having an alkyl group with a specific number of carbon atoms and triphenyl phosphorothioate can prevent or reduce the deterioration of the acoustic characteristics without being affected by other components of the grease, such as the base oil; this is an unprecedented finding.

Hereinafter, the present invention will be specifically described.

### Rolling Bearing

First, a preferred embodiment of the rolling bearing according to the present invention will be described in detail with reference to the accompanying drawings. Note that the present invention is not limited to the embodiments described below.

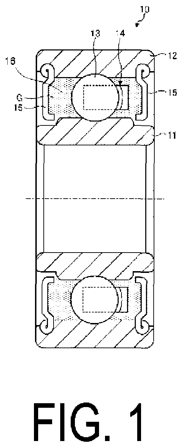

FIG. 1 is a radial cross-sectional view illustrating a rolling bearing 10 according to a preferred embodiment of the present invention. The rolling bearing 10 has a basic structure similar to a rolling bearing known in the art, and includes an annular inner ring 11, an outer ring 12, a plurality of rolling elements 13, a retainer 14, and a sealing member 15.

The inner ring 11 is a cylindrical structure disposed coaxially with a central axis at the outer peripheral side of a shaft (not illustrated). The outer ring 12 is a cylindrical structure disposed coaxially with the inner ring 11 at the outer peripheral side of the inner ring 11. Each of the plurality of rolling elements 13 is a ball disposed at a track in an annular bearing space 16 formed between the inner ring 11 and the outer ring 12. That is, the rolling bearing 10 in the present embodiment is a ball bearing.

The retainer 14 is disposed in the track to hold the plurality of rolling elements 13. The retainer 14 is an annular body arranged coaxially with the central axis of the shaft and includes a plurality of pocket parts to hold the rolling elements 13 at one side in the direction of the central axis, and in each of the pocket parts, the rolling element 13 is accommodated. The rolling elements 13 are held by the retainer 14 at predetermined intervals in a circumferential direction of the inner ring 11 and the outer ring 12, and falling-off of the rolling elements 13 and contact between the adjacent rolling elements 13 are prevented or reduced. The shape (e.g., a crown shape and a waveform) and material (e.g., made of a steel plate or resin) of the retainer 14 may be optionally determined and are not limited to a specific shape and material.

The sealing member 15 is fixed to the inner peripheral surface of the outer ring 12 and extends toward the inner ring 11 side, and seals the bearing space 16. A grease composition G is filled in the bearing space 16 sealed by the sealing member 15. That is, the grease composition G is held between the inner ring 11 and the outer ring 12. For the grease composition G, a grease composition described later is used. Note that the amount of the grease G filled inside the bearing space 16 can be, for example, from 5 to 50% of the volume of the bearing space 16.

The sealing member 15 is formed, for example, of a steel plate or rubber, and examples of the steel plate or rubber include a steel plate shield not in contact with an outer periphery of the inner ring 11, and a non-contact type rubber seal not in contact with the outer periphery of the inner ring 11. In the present invention, either of the sealing members, the steel plate shield or the non-contact type rubber seal, can be used. Note that the drawing illustrates an aspect including the sealing member 15, but the present invention also includes an aspect with the rolling bearing including no sealing member.

In the rolling bearing 10 having the configuration described above, the grease composition G acts to reduce the friction between the rolling elements 13 and the retainer 14 as well as the friction between the rolling elements 13 and the inner ring 11 and the outer ring 12. Due to the reduction of the friction, the frictional torque is reduced, and the generation of frictional heat is also reduced, promoting smooth rotation of the inner ring 11 and the outer ring 12. As can be seen from the configuration illustrated in FIG. 1, the grease composition G filled in the rolling bearing 10 lubricates between the rolling elements 13 and the inner ring 11 or the outer ring 12 when the rolling bearing 10 rotates.

The present invention is particularly effective in rolling bearings with an outer diameter, for example, of 22 mm or less.

The rolling bearing according to the present invention can be used as a rolling bearing of a motor (e.g., a fan motor or a cleaner motor) used, for example, in automobiles, home appliances, and information devices.

### Regarding Acoustic Characteristics

The rolling bearing according to the present invention is characterized in that not only a bearing with improved friction characteristics is obtained but also the bearing has prevented or reduced the deterioration of the acoustic characteristics by blending a grease composition described later with molybdenum dithiocarbamate containing an alkyl group with 8 or more carbon atoms and triphenyl phosphorothioate in combination.

The rolling bearing according to the present invention is characterized in that, for example, an Anderon value of an M band is 1.2 or less after the inner ring is rotated at a rotation speed of 1800 rpm for 30 seconds at room temperature in an air atmosphere in a state of applying a preload to the outer ring in an axial direction so that an average surface pressure of the inner ring is 800 MPa. In the present invention, the Anderon value is 1.2 or less, and from the perspective of the acoustic characteristics, the Anderon value is preferably 1.1 or less and particularly preferably 1.0 or less.

### Motor

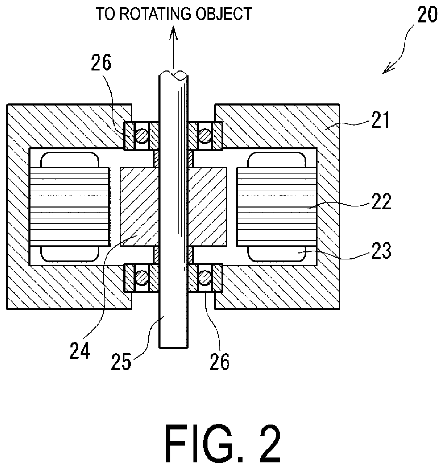

As an example, referring to FIG. 2, an embodiment of a motor including the rolling bearing of the present embodiment will be described in detail, but the present invention is not limited to the following embodiment.

FIG. 2 is a shaft-direction cross-sectional view of a motor according to an embodiment of the present invention. A motor 20 has a basic structure similar to motors known in the art and includes a housing 21, a stator 22, a coil 23, a rotor magnet 24, a shaft 25, and rolling bearings 26 supporting the shaft 25.

The motor 20 generates a magnetic force by passing a current supplied from a power source (not illustrated) via a drive circuit to the coil 23 wound around the stator 22, thereby rotating the rotor magnet 24, and transmitting the rotation to an external rotating object through the shaft 25.

### Grease Composition

The grease composition used in the rolling bearing according to the present invention contains a base oil, a thickener, molybdenum dithiocarbamate containing an alkyl group with 8 or more carbon atoms, and triphenyl phosphorothioate.

Hereinafter, the grease composition to be filled in the rolling bearing according to the present invention will be described.

### Base Oil

In the grease composition filled in the rolling bearing according to the present embodiment, as the base oil, a synthetic oil generally used as a grease base oil, such as a synthetic hydrocarbon oil, an ether-based synthetic oil, or an ester-based synthetic oil, can be used alone or in combination.

Examples of the synthetic hydrocarbon oil include normal paraffins; isoparaffins; polybutenes; polyisobutylenes; and polyalphaolefins (PAOs), such as 1-decene oligomer and co-oligomers of 1-decene and ethylene.

Examples of the ester-based synthetic oil include diester oils, such as dibutyl sebacate, di-2-ethylhexyl sebacate, dioctyl sebacate, dioctyl adipate, diisodecyl adipate, ditridecyl adipate, ditridecyl phthalate, and methyl acetyl ricinoleate; aromatic ester oils, such as trioctyl trimellitate, tri-2-ethylhexyl trimellitate, tridecyl trimellitate, tetraoctyl pyromellitate, and tetra-2-ethylhexyl pyromellitate; polyolester oils, such as trimethylolpropane caprylate, trimethylolpropane pelargonate, pentaerythritol-2-ethylhexanoate, and pentaerythritol pelargonate; and carbonate ester oils.

In addition, examples of the ether-based synthetic oil can include alkyl ether oils and alkyl diphenyl ether oils, such as monoalkyl diphenyl ether, dialkyl diphenyl ether, and polyalkyl diphenyl ether.

Furthermore, the viscosity of the base oil used in the present invention is not particularly limited, but in view of the dispersion stabilities of molybdenum dithiocarbamate and triphenyl phosphorothioate described later, for example, a base oil with a kinematic viscosity at 40°C in the range of 20 to 150 mm²/s can be used.

The base oil may be contained in a proportion, for example, of 70 mass% or more based on the total mass of the grease composition used in the present invention. The base oil may be contained, for example, in a proportion of 70 mass% to 90 mass% based on the total mass of the grease composition.

### Thickener

In the grease composition used in the present invention, the type of thickener is not particularly limited, but for example, a urea-based thickener can preferably be used.

Urea compounds have excellent heat resistance, water resistance, and particularly excellent stability at high temperatures and thus are suitably used as thickeners at application sites in high-temperature environments.

A urea compound, such as a diurea compound, a triurea compound, or a polyurea compound, can be used as the urea-based thickener. From the perspective of the acoustic characteristics (silent properties), a diurea compound is preferably used. In addition, the type of urea compound preferably includes at least one of aliphatic-aromatic ureas, alicyclic-aliphatic ureas, and aliphatic ureas.

A urea compound known in the art can be used as the urea-based thickener.

An example of the diurea compound used as the urea-based thickener can include a diurea compound represented by Formula (2) below.

R₅-NHCONH-R₆-NHCONH-R₇ Formula (2)

In Formula (2) above, R₅ and R₇ each independently represent a monovalent aliphatic hydrocarbon group, a monovalent alicyclic hydrocarbon group, or a monovalent aromatic hydrocarbon group, and at least one of R₅ and R₇ represents a monovalent aliphatic hydrocarbon group or a monovalent alicyclic hydrocarbon group. For example, one of R₅ and R₇ can represent an aliphatic hydrocarbon group and the other can represent a monovalent alicyclic hydrocarbon group or a monovalent aromatic hydrocarbon group, or one of R₅ and R₇ can represent an aliphatic hydrocarbon group and the other can represent a monovalent aromatic hydrocarbon group.

In addition, R₆ represents a divalent aromatic hydrocarbon group.

Note that the diurea compound represented by Formula (2) may be in the form of a mixture of a plurality of types and can be, for example, a mixture of a compound with both R₅ and R₇ representing a monovalent aliphatic hydrocarbon group, a compound with both R₅ and R₇ representing a monovalent aromatic hydrocarbon group, and a compound with one of R₅ and R₇ representing an aliphatic hydrocarbon group and the other representing a monovalent aromatic hydrocarbon group.

Examples of the monovalent aliphatic hydrocarbon group include linear or branched saturated or unsaturated alkyl groups with 6 to 26 carbon atoms.

Examples of the monovalent alicyclic hydrocarbon group include cycloalkyl groups with 5 to 12 carbon atoms.

In addition, examples of the aromatic hydrocarbon group include monovalent or divalent aromatic hydrocarbon groups with 6 to 20 carbon atoms.

The urea compound used as the urea-based thickener can be synthesized using an amine compound and an isocyanate compound.

Examples of the amine compound include aliphatic amines represented by hexylamine, octylamine, dodecylamine, hexadecylamine, octadecylamine (stearylamine), behenylamine, oleylamine, and the like; alicyclic amines represented by cyclohexylamine and the like; and aromatic amines represented by aniline, p-toluidine, ethoxyphenylamine, and the like. These amine compounds can also be used in combination of two or more during the synthesis of the urea compound.

In addition, examples of the isocyanate compound include aromatic diisocyanates, such as phenylene diisocyanate, tolylene diisocyanate (TDI), diphenyldiisocyanate, diphenylmethane diisocyanate (MDI), and dimethylbiphenyl diisocyanate (TODI); and aliphatic diisocyanates, such as octadecane diisocyanate, decane diisocyanate, and hexane diisocyanate.

Note that, when an aromatic diurea compound obtained by using an aromatic monoamine as an amine raw material and an aromatic diisocyanate is used as a urea-based thickener, abnormal noise may possibly occur, and thus use of such an aromatic diurea compound needs consideration.

The urea-based thickener (urea compound) can be blended so as to be, for example, from 10 to 20 mass% relative to the total amount of the grease composition used in the present invention.

### Molybdenum Dithiocarbamate (MoDTC)

The grease composition used in the present invention is characterized by containing molybdenum dithiocarbamate (MoDTC) as an essential component together with triphenyl phosphorothioate described later.

The molybdenum dithiocarbamate used in the present invention contains an alkyl group with 8 or more carbon atoms, and for example, molybdenum dithiocarbamate including molybdenum dithiocarbamate containing an alkyl group with 13 or more carbon atoms can be used.

Examples of the molybdenum dithiocarbamate can include a compound represented by Formula (1) below.

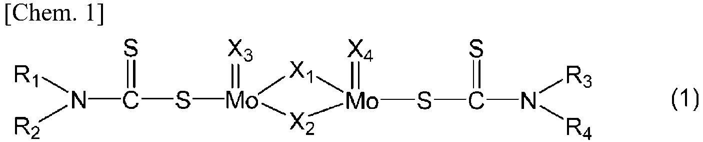

In Formula (1) above
R₁ to R₄ each independently represent a hydrocarbon group having 8 to 14 carbon atoms, and
X₁ to X₄ each independently represent an oxygen atom or a sulfur atom.

Examples of the hydrocarbon group having 8 to 14 carbon atoms in R₁ to R₄ include alkyl groups having 8 to 14 carbon atoms and aromatic hydrocarbon groups having 8 to 14 carbon atoms and can include, in particular, alkyl groups having 8 to 14 carbon atoms, such as an octyl group, a nonyl group, a decyl group, an undecyl group, a dodecyl group, a tridecyl group, and a tetradecyl group. The alkyl group may be linear, branched, or cyclic, or any of the combinations of the linear, branched, and/or cyclic alkyl groups. In addition, at least one of R₁ to R₄ can be an alkyl group having 13 or 14 carbon atoms.

X₁ to X₄ represent an oxygen atom or a sulfur atom; for example, two or three of X₁ to X₄ can be sulfur atoms and the rest can be an oxygen atom or oxygen atoms; two of X₁ to X₄ can be sulfur atoms and the other two can be oxygen atoms; or for example, X₁ and X₂ can be sulfur atoms and X₃ and X₄ can be oxygen atoms.

The molybdenum dithiocarbamate represented by Formula (1) above may be molybdenum dithiocarbamate with a symmetric hydrocarbon group or molybdenum dithiocarbamate with an asymmetric hydrocarbon group.

Examples of the molybdenum dithiocarbamate with a symmetric hydrocarbon group include molybdenum dithiocarbamates with all of R₁ to R₄ being the same hydrocarbon group, or molybdenum dithiocarbamates with R₁ and R₂ being the same hydrocarbon group and R₃ and R₄ being the same hydrocarbon group different from R₁ and R₂.

Examples of the molybdenum dithiocarbamate with an asymmetric hydrocarbon group include molybdenum dithiocarbamates with all of R₁ to R₄ being different hydrocarbon groups, molybdenum dithiocarbamates with R₁ to R₃ being the same hydrocarbon group and R₄ being a different hydrocarbon group, or molybdenum dithiocarbamates with at least R₁ and R₂ being different hydrocarbon groups or R₃ and R₄ being different hydrocarbon groups (e.g., molybdenum dithiocarbamates with R₁ and R₃ being the same hydrocarbon group, R₂ and R₄ being the same hydrocarbon group, and R₁ and R₂ being different hydrocarbon groups).

Examples of the molybdenum dithiocarbamate used in the present invention can include compounds with all of R₁ to R₄ in General Formula (1) being an alkyl group with 8 carbon atoms and compounds with R₁ to R₄ each independently a group selected from alkyl groups with 8 carbon atoms and alkyl groups with 13 carbon atoms (a form of a mixture of a compound with all of R₁ to R₄ being an alkyl group with 8 carbon atoms and a compound with all of R₁ to R₄ being an alkyl group with 13 carbon atoms, a form of a compound with at least one of R₁ to R₄ being an alkyl group with 8 carbon atoms and the rest being an alkyl group with 13 carbon atoms, and a form of these mixtures).

The molybdenum dithiocarbamate can be blended in an amount such that the content of molybdenum atoms contained in the molybdenum dithiocarbamate is, for example, from 0.01 to 0.5 mass% relative to the total amount of the grease composition used in the present invention.

### Triphenyl Phosphorothioate (TPPT)

The grease composition used in the present invention is characterized by containing triphenyl phosphorothioate (TPPT) as an essential component together with the molybdenum dithiocarbamate described above.

Triphenyl phosphorothioate can be blended in an amount, for example, of 0.1 to 10 mass% relative to the total amount of the grease composition used in the present invention.

### Additional Additive

The grease composition used in the present invention can contain an additive usually used in grease compositions as necessary in a range not impairing the effects of the present invention.

Examples of such an additive include antioxidants, extreme pressure additives (extreme pressure agents), metal deactivators, friction modifiers (anti-wear agents), rust inhibitors, oiliness improvers, viscosity index improvers, and thickening agents.

In the case of containing such an additional additive, the added amount (total amount) of the additive is usually from 0.1 to 10 mass% relative to the total amount of the grease composition.

Examples of the antioxidant include hindered phenol-based antioxidants, such as octadecyl-3-(3,5-di-t-butyl-4-hydroxyphenyl)propionate, pentaerythritol tetrakis[3-(3,5-di-t-butyl-4-hydroxyphenyl)propionate], 2,4-bis-(n-octylthio)-6-(4-hydroxy-3,5-di-t-butylanilino)-1,3,5-triazine, 1,3,5-trimethyl-2,4,6-tris(3,5-di-t-butyl-4-hydroxybenzyl)benzene, triethylene glycol-bis[3-(3-t-butyl-5-methyl-4-hydroxyphenyl)propionate], 1,6-hexanediol-bis[3-(3,5-di-t-butyl-4-hydroxyphenyl)propionate], 2,2-thio-diethylenebis[3-(3,5-di-t-butyl-4-hydroxyphenyl)propionate], and N,N'-hexamethylenebis(3,5-di-t-butyl-4-hydroxyhydrocinnamide) octyl-3,5-di-tert-butyl-4-hydroxy-hydrocinnamic acid; other phenol-based antioxidants, such as 2,6-di-t-butyl-4-methylphenol and 4,4-methylenebis(2,6-di-t-butylphenol); and amine-based antioxidants, such as diphenylamine, alkylated diphenylamine, triphenylamine, hindered amine, phenyl-α-naphthylamine, alkylated phenyl-α-naphthylamine, phenothiazine, and alkylated phenothiazine.

In addition, examples of the extreme pressure additive include phosphorus-based compounds, such as phosphate esters, phosphite esters, and phosphate ester amine salts; sulfur-based compounds, such as sulfides and disulfides; chlorine-based compounds, such as chlorinated paraffin and chlorinated diphenyl; and metal salts of a sulfur-based compound, such as zinc dialkyldithiophosphate.

Examples of the metal deactivator include benzotriazole-based compounds, such as benzotriazoles, 1-[N,N-bis(2-ethylhexyl)aminomethyl]-benzotriazole, and 1-[N,N-bis(2-ethylhexyl)aminomethyl]-4-methylbenzotriazole; thiadiazole-based compounds, such as thiadiazoles, 2-mercaptothiadiazole, and 2,5-bis(alkyldithio)-1,3,4-thiadiazole; benzimidazole-based compounds, such as benzimidazoles, 2-mercaptobenzimidazole, and 2-(decyldithio)-benzimidazole; and sodium nitrite.

In addition, examples of the friction modifier (anti-wear agent) can include tricresyl phosphate and polymeric esters.

Examples of the polymeric esters include esters of aliphatic monovalent carboxylic acids and divalent carboxylic acids with a polyhydric alcohol. Specific examples of the polymeric esters include, but are not limited to, PRIOLUBE (registered trademark) series available from Croda Japan K.K.

The grease composition used in the present invention can be obtained by blending the above-mentioned base oil, thickener, molybdenum dithiocarbamate containing an alkyl group with 8 or more carbon atoms, triphenyl phosphorothioate, and as desired the additional additive.

In addition, the grease composition can also be obtained, for example, by blending a grease (base grease) composed of the base oil and the thickener with the molybdenum dithiocarbamate containing an alkyl group with 8 or more carbon atoms, triphenyl phosphorothioate, and as desired the additional additive.

Usually, the content of the thickener relative to the base grease is approximately from 10 to 30 mass%; for example, the content of the diurea compound (urea-based thickener) relative to the urea-based grease can be approximately from 10 to 25 mass% or approximately from 10 to 20 mass%.

The present invention is not limited to the embodiments and specific examples described in the present specification, and various changes and variations can be made within the scope of the technical idea described in the claims.

### Examples

Hereinafter, the present invention will be described in more detail with reference to examples. However, the present invention is not limited to the examples.

Grease compositions of Examples 1 to 6 and Comparative Examples 1 to 4 were prepared with the compositions shown in Table 1 below, and various evaluations were performed according to the procedures described later. In the following description, the example numbers of the grease compositions are also used as the example numbers of the ball bearings filled with these grease compositions and the example number of the evaluation of each test.

Note that the details and abbreviation of each component used in the preparation of the grease compositions are as follows.

### Base Oil

- PAO: polyalphaolefin [kinematic viscosity at 40°C: 48 mm²/s]
- Ether + PAO: mixed oil of alkyl diphenyl ether oil and polyalphaolefin [kinematic viscosity at 40°C: 80 mm²/s]
- Ether + ester: Mixed oil of alkyl diphenyl ether oil and aromatic ester oil [kinematic viscosity at 40°C: 80 mm²/s]

Note that the blending amount of the base oil is the balance of the following thickener and additives (TPPT, MoDTCs 1 to 3, and additional additives).

### Thickener

- Diurea compound: aliphatic-aromatic diurea compound (diurea compound obtained by reacting a mixture of aliphatic amine and aromatic amine with a diisocyanate compound)

Note that the thickener was added so as to be 12 mass% relative to the total of each grease composition.

### Additive

- TPPT: triphenyl phosphorothioate (IRGALUBE TPPT available from BASF Japan Ltd.)
   Note that the TPPT was added so as to be 2 mass% relative to the total of each grease composition.
- MoDTC 1: molybdenum dithiocarbamate containing an alkyl group with 8 carbon atoms and an alkyl group with 13 carbon atoms (SAKURA-LUBE (registered trademark) 525 available from ADEKA Corporation)
- MoDTC 2: molybdenum dithiocarbamate containing an alkyl group with 8 carbon atoms (SAKURA-LUBE (registered trademark) 200 available from ADEKA Corporation)
- MoDTC 3: molybdenum dithiocarbamate containing an alkyl group with 4 carbon atoms (SAKURA-LUBE (registered trademark) 600 available from ADEKA Corporation)
   Note that MoDTC 1 to MoDTC 3 were each added so as to give a molybdenum (MO) content of 0.1 mass% relative to the total of each grease composition.
- Additional additives:
   An antioxidant and a rust inhibitor were added so as to be 3 mass% in total in each grease composition (total mass: 100 mass%).

### Various Evaluations

### (1) Friction Characteristics Evaluation (Metal-Metal: Friction Test)

A metal-metal friction and wear test was performed using a vibration friction tester (trade name: SRV) available from Optimol Instruments. The test was performed in a ball-on-disc mode, and a ball (material: SUJ2, φ 10 mm) and a disc (material: SUJ2, φ 24 mm) were used. The test conditions were a load of 100 N, a measurement temperature of 50°C, a sliding distance of 1 mm, a frequency of 50 Hz, and a test time of 20 minutes (1200 seconds). At the start of the test, 5 mg of each grease composition was fed, and a friction coefficient was measured over time during the test.

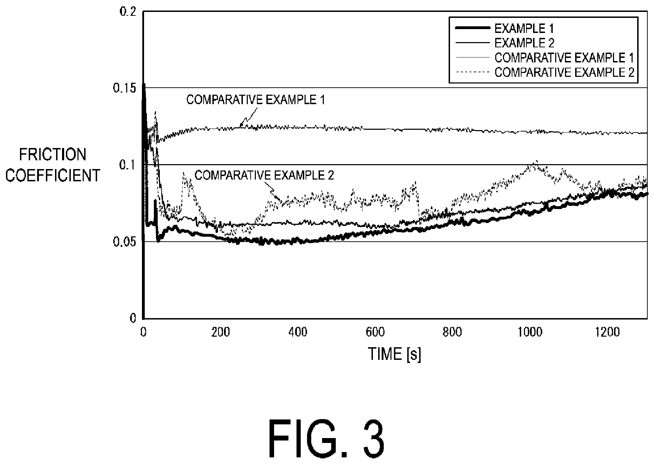

FIG. 3 shows the measurement results of the friction coefficient with respect to the test time (seconds) in Examples 1 and 2 and Comparative Examples 1 and 2.

### (2) Acoustic Evaluation

The acoustic performance of the ball bearing filled with each test grease composition was evaluated by measuring the Anderon value of the M band (from 300 to 1800 Hz) using an Anderon meter.

A ball bearing (inside diameter 3 mm, outside diameter 8 mm, width 4 mm) equipped with a steel shield was filled with each grease composition of Examples 1 to 6 and Comparative Examples 1 to 4 from 25% to 35% of the bearing volume. A preload of 10 N was applied to the outer ring of this ball bearing in the axial direction. Then, a shaft was connected to the rotation axis of a test motor so that the ball bearing rotated on the inner ring. Under this preload condition, the average surface pressure of the inner ring of this ball bearing is about 800 MPa.

Then, the inner ring was rotated at a rotation speed of 1800 rpm at room temperature in an air atmosphere. In that state, a speed pickup was brought into contact with the outer periphery of the outer ring of the ball bearing in the radial direction, mechanical vibration transmitted to the outer ring was detected, and an Anderon value after 30 seconds from the start of rotation was calculated (the maximum value of the Anderon value in measurement: 50).

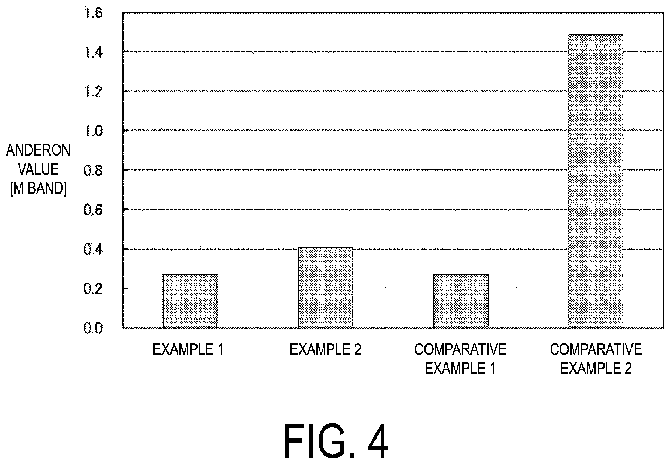

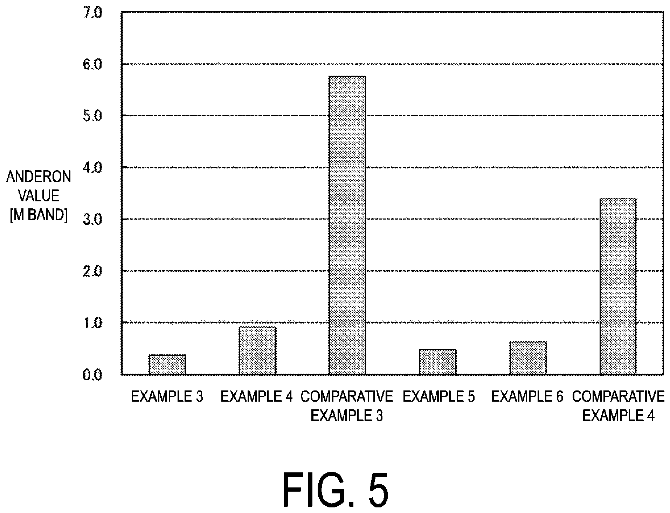

The ball bearings of Examples 1 to 6 and Comparative Examples 1 to 4 were tested three times each, and the average value of the Anderon values was determined. The results obtained are shown in Table 1. In addition, FIG. 4 shows Anderon values (M band) after 30 seconds from the start of rotation in the case of grease composition containing PAO as the base oil: Examples 1 and 2, and Comparative Examples 1 and 2, and FIG. 5 shows Anderon values (M band) after 30 seconds from the start of rotation in the case of grease composition containing the mixed oil of ether and PAO as the base oil: Examples 3 and 4, and Comparative Example 3 and in the case of grease composition containing the mixed oil of ether and ester as the base oil: Examples 5 and 6, and Comparative Example 4.

Note that the M band frequency of 300 to 1800 Hz is said to be a harsh sound to human ears.

### Table 1

**Table 1**

| Grease composition | | Example | | | | | | Comparative Example | | | |
|---|---|---|---|---|---|---|---|---|---|---|---|
| | | 1 | 2 | 3 | 4 | 5 | 6 | 1 | 2 | 3 | 4 |
| Base oil | PAO | YES | YES | | | | | YES | YES | | |
| | Ether + PAO | | | YES | YES | | | | | YES | |
| | Ether + ester | | | | | YES | YES | | | | YES |
| Thickener: diurea compound | | YES | YES | YES | YES | YES | YES | YES | YES | YES | YES |
| *1 Additive | TPPT | YES | YES | YES | YES | YES | YES | YES | YES | YES | YES |
| | MoDTC 1 (alkyl group: C8 and C13) | YES | | YES | | YES | | | | | |
| | MoDTC 2 (alkyl group: C8) | | YES | | YES | | YES | | | | |
| | MoDTC 3 (alkyl group: C4) | | | | | | | | YES | YES | YES |
| • Additional additive | | YES | YES | YES | YES | YES | YES | YES | YES | YES | YES |
| Anderon value [M band after 30 seconds] | | 0.27 | 0.41 | 0.37 | 0.91 | 0.48 | 0.62 | 0.27 | 1.49 | 5.76 | 3.39 |

| | | | | | | | | | | | |
|---|---|---|---|---|---|---|---|---|---|---|---|
| *1 MoDTCs 1 to 3 were each added so as to give a molybdenum (Mo) content of 0.1 mass% relative to the total of the grease composition | | | | | | | | | | | |

Regarding the evaluation of the friction characteristics, as shown in FIG. 3, in comparison with the grease composition of Comparative Example 1 blended with only triphenyl phosphorothioate (TPPT), the grease compositions of Examples 1 and 2, and Comparative Example 2 further blended with the molybdenum dithiocarbamate resulted in reduced friction coefficients regardless of the number of carbon atoms of the alkyl group in the molybdenum dithiocarbamate, confirming that the friction characteristics can be improved.

On the other hand, regarding the acoustic characteristics, as shown in Table 1 and FIG. 4, in Comparative Example 2 using the grease composition blended with the molybdenum dithiocarbamate containing an alkyl group with 4 carbon atoms, the Anderon value after 30 seconds greatly increased.

In contrast to this, Examples 1 and 2 blended with the molybdenum dithiocarbamate containing an alkyl group with 8 or more carbon atoms exhibited an Anderon value comparable to the Anderon value of Comparative Example 1 blended with molybdenum dithiocarbamate.

In addition, also in the aspects of changing the base oil from the oil containing only PAO to the mixed oil of ether and PAO (Examples 3 and 4, and Comparative Example 3) and the aspects of changing to the mixed oil of ether and ester (Examples 5 and 6, and Comparative Example 4), the acoustic characteristics were similarly changed significantly by the alkyl group contained in the molybdenum dithiocarbamate. That is, Examples 3 and 4 as well as Examples 5 and 6 blended with the molybdenum dithiocarbamate containing an alkyl group with 8 or more carbon atoms exhibited lower Anderon values after 30 seconds in comparison with Comparative Examples 3 and 4 blended with the molybdenum dithiocarbamate containing an alkyl group with 4 carbon atoms.

The results described above show that the rolling bearing according to the present invention can achieve excellent friction characteristics and prevent or reduce the deterioration of the acoustic characteristics by using the grease composition using a combination of the molybdenum dithiocarbamate containing an alkyl group with 8 or more carbon atoms and triphenyl phosphorothioate.

The best embodiments have been described in detail above, but the present invention is not limited to the embodiments described above, and variations, modifications, and the like in a range achieving the object of the present invention are included in the present invention.

### Reference Signs List

10... Rolling bearing; 11...Inner ring; 12... Outer ring; 13... Rolling element; 14..Retainer; 15... Sealing member; 16... Bearing space; 20...Motor; 21...Housing; 22... Stator; 23...Coil; 24...Rotor magnet; 25...Shaft; 26... Bearing

## Claims

1. A rolling bearing having an outer diameter of 22 mm or less, the rolling bearing comprising:
an inner ring;
an outer ring disposed coaxially with the inner ring at an outer peripheral side of the inner ring;
a plurality of rolling elements disposed between the inner ring and the outer ring;
a retainer to hold the rolling elements; and
a grease composition held between the inner ring and the outer ring, wherein
the grease composition contains a base oil, a thickener, molybdenum dithiocarbamate containing an alkyl group having 8 or more carbon atoms, and triphenyl phosphorothioate, and
the rolling bearing has an Anderon value of an M band of 1.2 or less after the inner ring is rotated at a rotation speed of 1800 rpm for 30 seconds at room temperature in an air atmosphere in a state of applying a preload to the outer ring in an axial direction so that an average surface pressure of the inner ring is 800 MPa.

2. The rolling bearing according to claim 1, wherein
the molybdenum dithiocarbamate contains molybdenum dithiocarbamate containing an alkyl group having 13 or more carbon atoms.

3. The rolling bearing according to claim 1. wherein
the molybdenum dithiocarbamate is a compound represented by Formula (1) below: 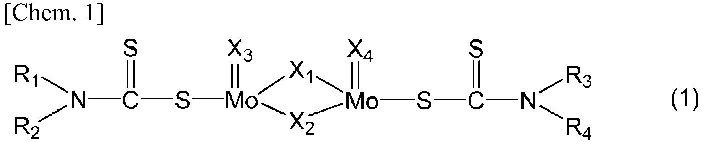 (where
R₁ to R₄ each independently represent a hydrocarbon group having 8 to 14 carbon atoms, and
X₁ to X₄ each independently represent an oxygen atom or a sulfur atom).

4. The rolling bearing according to claim 3, wherein
the molybdenum dithiocarbamate is a compound with at least one of R₁ to R₄ in Formula (1) above being an alkyl group having 13 or 14 carbon atoms.

5. The rolling bearing according to claim 3, wherein
the molybdenum dithiocarbamate is a compound with R₁ to R₄ in Formula (1) above being an alkyl group having 8 carbon atoms.

6. The rolling bearing according to claim 3, wherein the molybdenum dithiocarbamate is a compound with R₁ to R₄ in Formula (1) above each independently being a group selected from an alkyl group having 8 carbon atoms and an alkyl group having 13 carbon atoms.

7. A motor comprising the rolling bearing described in any one of claims 1 to 6.
